Europäisches Patentamt

(19) European Patent Office

Office européen des brevets

(11) EP 0 768 639 A1

(12) EUROPEAN PATENT APPLICATION
published in accordance with Art. 158(3) EPC

(43) Date of publication:
16.04.1997 Bulletin 1997/16

(21) Application number: 96910972.7

(22) Date of filing: 17.04.1996

(51) Int. Cl.$^6$: **G10L 9/02**

(86) International application number:
PCT/ES96/00088

(87) International publication number:
WO 96/33486 (24.10.1996 Gazette 1996/47)

(84) Designated Contracting States:
AT BE CH DE DK FR GB GR IE IT LI LU NL PT SE

(30) Priority: 18.04.1995 ES 9500796

(71) Applicant: Espar Figueras, Oriol
08017 Barcelona (ES)

(72) Inventor: Espar Figueras, Oriol
08017 Barcelona (ES)

(74) Representative: Ponti Sales, Adelaida
Oficina Ponti
Passeig de Gràcia, 33
08007 Barcelona (ES)

(54) **SPEECH RECOGNITION PROCESS AND DEVICE**

(57) The invention discloses a speech recognition process and device by means of which, in the reference signal are predefined a plurality of intervals corresponding to each formant, and comprising a first step whereby is determined the maximun value of the signal in a plurality of frequency bands wherein is divided the first interval, and a second step to calculate a parameter indicating the dissimilarity between the power of the speech signal and the reference signal. The accoustic characteristics of the speech signal and of the reference signal are compared without having to compare the two full spectra between each other.

## Description

The present invention relates to a method for calculating the distance or dissimilarity between a voice signal and a reference signal used in a speech recognition system, and to the manufacturing device thereof.

## BACKGROUND OF THE INVENTION

All speech recognition systems require that the acoustic parameters used for determining the distance or dissimilarity between two different signals, namely the voice signal and the various reference signals, be established. If a recognition system is required wherein the speech is independent from the speaker in order to process continuous speech, it is necessary to extract and compare the acoustic features of the various phonetic units employed.

The current speech recognition systems present a drawback in that they are dependent from the speaker, so that the speaker is required to make a short pause after pronouncing each word.

Current systems present also the inconvenient in that they require large memories for data storage, in addition to being inaccurate and very sensitive to back noise. This is due to the fact that the systems are based on spectrum comparison or linear prediction coefficients (LPC) or cepstral coefficients comparisons, these being parameters dependent from the time factor.

To obtain the acoustic characteristics of a voice signal, it is known that the voice signal energy is centered around the resonance frequencies of the buccal conduct, the so-called formants. It is also known that the frequencies of the first formants are similar in one same phonetic unit, irrespective of the speaker. The frequencies of the first formants are thus the characteristic parameter of the voice signal which allows each phonetic unit to be recognized.

In order to remove both the characteristics peculiar to each speaker and the noise effects, no evaluation is performed on the whole signal; rather, the frequency bands corresponding to the formants in which the voice signal energy is concentrated are evaluated.

Furthermore, the frequency bands in each formant are evaluated independently, since the energy differences between the frequency bands in each formant do not constitute a parameter independent from the speaker.

Therefore, instead of making a comparison between signal spectra, a comparison is made between the voice signal formants and the reference signal formants.

## DESCRIPTION OF THE INVENTION

The object of the present invention is to provide a method and a device for carrying out the method which allow for a comparison, as accurately as possible, between the acoustic features of the voice signal and the acoustic features of the phonetic units to be recognized.

Thus, with the device and method of the invention it is possible to solve the above difficulties, further providing other advantages as described hereinafter.

The method for calculating the distance or dissimilarity between a voice signal and a reference signal to be used in a speech recognition system is characterized in that a plurality of first intervals corresponding to each formant or resonance frequency are pre-defined in the reference signal, said method comprising the following stages for each formant:

a) determining the maximum value of the voice signal from among the energy values that said signal presents in a plurality of predetermined frequency bands into which the first frequency interval is divided;
b) calculating, for each frequency band, a parameter indicative of the dissimilarity between the voice signal energy standardized in respect to the maximum value obtained in stage a), and the reference signal.

The method allows for a comparison to be made between the acoustic features of the voice signal and the acoustic features of the reference signals (phonetic units) to be recognized.

The method thus evaluates the energy differences between the reference signal spectrum formants and the spectrum of the voice signal to be analyzed, a comparison being made of the voice signal formants and the reference signal formants, and not a comparison between signal spectra, as in the case of present day systems.

Furthermore, each first interval comprises a second interval which defines the frequencies wherein the voice signal formant must be located so that said voice signal corresponds to the formant of a speech phonetic unit to be recognized, and in that

stage a) further comprises to determine the maximum energy value of the voice signal from among the energy values that said voice signal presents in each of the plurality of predetermined bands into which the second frequency intervals are divided; subtracting an attenuation value from the maximum values corresponding to the first and second intervals;
stage b) comprises to calculate, for each frequency band, the difference in absolute value between the voice signal energy value, standardized in respect to the maximum value of the first interval obtained in stage a), and the reference signal value;

the method further comprising the following stages:

c) multiplying the values obtained in stage b) by zero when the energy value of the voice signal in a frequency band is lower than the maximum attenuated value of the voice signal, if the band is located in the first interval, and when the energy value of the voice signal is lower than the attenuated maximum value of the voice signal in the first and second intervals, if the band is located in the second interval;

d) adding the remaining differences from stage c);

e) dividing the addition of the previous stage by the number of bands not multiplied by zero in stage c), thus obtaining the distance referred to a single formant; and the method further comprising a stage which consists in adding up the values obtained in stage e) of all the formants being considered, which make up the voice signal, in order to obtain the distance or dissimilarity between the voice signal and the reference signal.

Frequency bands are thus employed which are useful for recognizing a given phonetic unit. These frequency bands are dependent on the voice signal and reference signal to be compared, comparing not two full spectra but the frequency bands corresponding to the voice signal and reference signal formants.

Preferably, the attenuation value in stage a) is between 3 and 48 dB.

Said attenuation value is the maximum attenuation value allowed in a frequency band used in the method.

According to an embodiment of the invention, and depending on the formant of the phonetic unit to be recognized, the second interval comprises a plurality of subintervals, so that the maximum value of said second interval is determined from among the maximum values in each of said subintervals.

The device for calculating the distance or dissimilarity between a voice signal and a reference signal used in a speech recognition system is characterized in that it comprises a first combinational electronic circuit which performs the operations corresponding to stage a) for all the formants; and a plurality of second combinational electronic circuits, each of which performs the operations corresponding to stages b) and c), depending on the number of circuits and the number of predetermined frequency bands. It also comprises a plurality of first adder electronic circuits, each of which performs the addition corresponding to stage d); a plurality of second adder electronic circuits which add the number of remaining bands in stage c), as indicated in stage e); a plurality of electronic circuits for determining the inverse number corresponding to the addition obtained from the second adder electronic circuits; a plurality of multiplying electronic circuits which multiply the inverse numbers obtained by the additions obtained in the first adder electronic circuits, thus performing the division corresponding to stage e) for all the formants; and a third adder electronic circuit to perform the addition of the values obtained in stage e) for all the formants involved which constitute the voice signal, thus obtaining the distance or dissimilarity between the voice signal and the reference signal.

The device thus described performs all the stages in the above method. The only operation which poses certain difficulties is the division, although, as can be seen, the problem is solved by multiplying a number by the inverse of another.

A minimum of only 6 bits is necessary for codifying each frequency band of each spectrum in each reference signal, so therefore the device's memory storage requirements are minimal.

Furthermore, this device provides a high calculation speed, all the calculuses being performed simultaneously, in one same cycle.

Preferably, the first combinational electronic circuit comprises a plurality of logical AND and NOT gates which perform a selection of the voice signal values in each of the predetermined frequency bands, depending on whether they are in the first or in the second frequency intervals in each formant in the reference signal; a plurality of third combinational electronic circuits which define the maximum value among the values selected by the logical AND and NOT gates; and a plurality of subtracter electronic circuits in absolute value which subtract the attenuation value from the maximum values obtained by the third combinational electronic circuits.

The first electronic circuit calculates the maximum values in each of the zones in the voice signal spectrum.

Advantageously, the third combinational electronic circuits comprise a plurality of logical AND and OR gates and a plurality of combinational electronic circuits which select the appropriate bits in the voice signal values in each of the predetermined frequency bands to establish the maximum value.

The third combinational electronic circuits are based on the following maximum value determining equations:

$$b_0{}^{max} = b_0{}^0 + b_0{}^1 + b_0{}^2 + ... + b_0{}^n$$

$$b_1{}^{max} = c_0{}^0 b_1{}^0 + c_0 1 b_1{}^1 + c_0{}^2 b_1{}^2 + ... + c_0{}^n b_1{}^n$$

$$b_2{}^{max} = c_1{}^0 b_2{}^0 + c_1{}^1 b_2{}^1 + c_1{}^2 b_2{}^2 + ... + c_1{}^n b_2{}^n$$

$$b_3{}^{max} = c_2{}^{o}b_3{}^{o} + c_2{}^{1}b_3{}^{1} + c_2{}^{2}b_3{}^{2} + ... + c_2{}^{n}b_3{}^{n}$$

$$b_4{}^{max} = c_3{}^{o}b_4{}^{o} + c_3{}^{1}b_4{}^{1} + c_3{}^{2}b_4{}^{2} + ... + c_3{}^{n}b_4{}^{n}$$

$$b_5{}^{max} = c_4{}^{o}b_5{}^{o} + c_4{}^{1}b_5{}^{1} + c_4{}^{2}b_5{}^{2} + ... + c_4{}^{n}b_5{}^{n}$$

where $b_m{}^{max}$ is the maximum value m bit required, and $b_m{}^{n}$ is m bit in frequency band n.

As can be seen from these formulas, the voice signal values in each of the frequency bands are shown in a binary code, and are formed by six bits.

Thus, the third circuits implement the obtaining of the maximum value from among the "n" frequency bands.

The fourth combinational circuits comprise a plurality of logical AND, NOT and OR gates for determining the values Of the $c_m{}^{n}$ coefficients according to the following equations:

$$c_0{}^{n} = b_0{}^{max}b_0{}^{n} + b_0{}^{max}b_0{}^{n}$$

$$c_1{}^{n} = c_0{}^{n}(b_1{}^{max}b_1{}^{n} + b_1{}^{max}b_1{}^{n})$$

$$c_2{}^{n} = c_1{}^{n}(b_2{}^{max}b_2{}^{n} + b_2{}^{max}b_2{}^{n})$$

$$c_3{}^{n} = c_2{}^{n}(b_3{}^{max}b_3{}^{n} + b_3{}^{max}b_3{}^{n})$$

$$c_4{}^{n} = c_3{}^{n}(b_4{}^{max}b_4{}^{n} + b_4{}^{max}b_4{}^{n})$$

Also preferably, the second combinational electronic circuit comprises a first logical AND gate for establishing whether or not the frequency band considered is located within the second frequency interval; a plurality of first multiplexor electronic circuits and a plurality of comparing electronic circuits for eliminating the frequency bands with a voice signal value below the maximum attenuated voice signal value, said maximum value corresponding to the first or second interval, depending on which interval the frequency band considered is located; said multiplexor circuits being connected to the corresponding comparing circuits, the second comparator circuit corresponding to the second interval being connected to the first AND gate.

Furthermore, the second electronic circuit also comprises an OR gate for detecting whether the band in question is useful for the distance calculation, upon directly receiving a "1" from one of the comparing electronic circuits, when the frequency band is comprised within the first interval and, via the first AND gate, when the frequency band is comprised within the second interval; a second multiplexor electronic circuit and first and second subtracter electronic circuits in absolute value for calculating the differences between the voice signal and reference signal values for each of the predetermined frequency bands, the second multiplexor circuit being connected to the first subtracter circuit in absolute value and the second subtracter circuit in absolute value being connected to the first subtracter circuit in absolute value.

It also comprises a second logic AND gate, connected to the second subtracter circuit in absolute value which, in the event that the OR gate has a "1" at its outlet, allows the difference value to pass; a plurality of third AND gates, as many as formants are being considered, connected to a second AND gate which present the difference value at their outlet, in said AND gate associated to the formant being treated, if the OR gate presents a "1" at its outlet; a plurality of fourth AND gates, as many as formants are being considered, connected to the OR gate, one of which, that corresponding to the formant being treated, presents a "1" at its outlet in the event that the OR gate also presents a "1" at its outlet; and a plurality of NOT gates to differentiate the AND gates corresponding to each of the formants being considered.

BRIEF DESCRIPTION OF THE DRAWINGS

For a better understanding of the description as set forth, drawings are attached wherein, schematically and in the form of a non-limiting example, a practical case of an embodiment is provided.

In said drawings,

Figure 1 is a sketch of the method object of the invention;
Figure 2 is a block diagram of the device for performing the method in Figure 1;
Figure 3 is a block diagram of a digital electronic circuit, as shown in Figure 2, designed to check the interval within which is located each critical band, and to calculate the maximum value of the voice signal in each interval;
Figure 4 is a block diagram of a digital electronic circuit, as shown in Figure 3, which calculates the maximum value mentioned in the description of the previous figure;

Figure 5 shows a combinational electronic circuit used in the circuit in Figure 4; and

Figure 6 shows a block diagram in a combinational electronic circuit which selects the critical bands to be considered in calculating the differences between the voice signal and the reference signal, as shown in the diagram in Figure 2.

## DESCRIPTION OF A PREFERRED EMBODIMENT

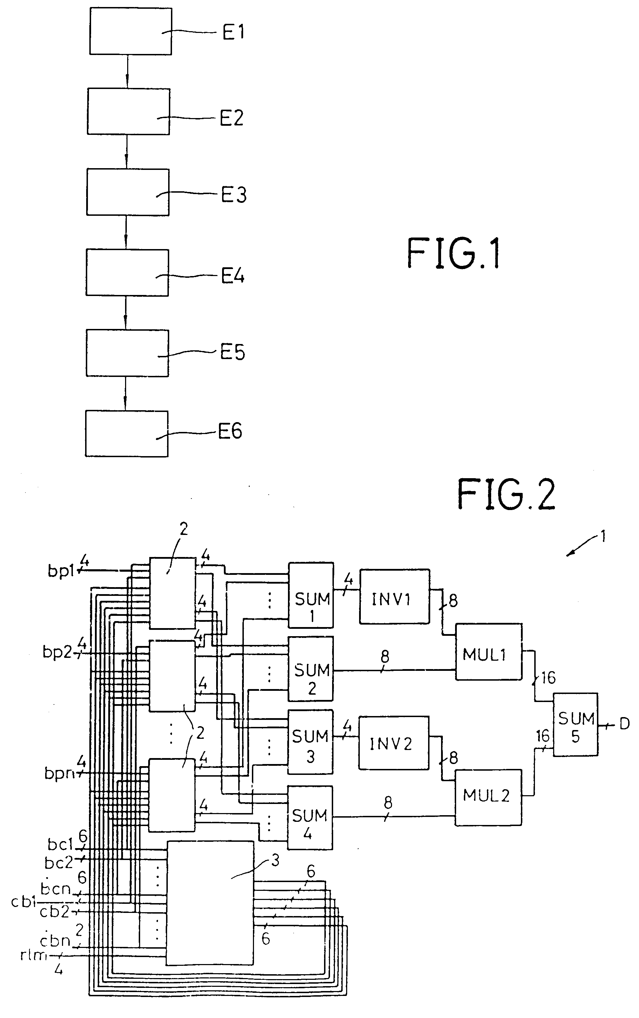

As can be seen from Figure 1, the method for calculating the distance or dissimilarity between a voice signal and a reference signal used in a speech recognition system comprises a first stage E1 for each formant, in which the maximum value m1; m2 of the voice signal is determined from among the energy values bc(n) (n = band considered) presented by said signal in a plurality of predetermined frequency bands into which is divided a first frequency interval and wherein is determined a maximum voice signal energy value m3; m4 among the energy values presented by said voice signal in each of a plurality of predetermined bands into which is divided a second frequency interval, which is subtracted from the maximum m1, m3; m2, m4 values corresponding to the first and to the second intervals of an rlm attenuation value.

It also comprises a second stage E2 for each formant, in which is calculated, for each frequency band, the difference in absolute value between the energy value of the voice signal, standardized in respect to the maximum m1; m2 value of the first interval obtained in the first stage E1, and the value of the reference signal.

It comprises a third stage E3 wherein the values obtained in second stage E2 are multiplied by zero in the event that the voice signal energy value bc(n) within a frequency band is below the maximum attenuated value mx1; mx2 of the voice signal if band "n" is located in the first interval, and provided the voice signal energy value is below the maximum voice signal attenuated value (mx1, mx2; mx3, mx4) in the first and second interval voice signal, provided band "n" is in the second interval; a fourth stage E4 wherein are added the differences remaining from the third stage E3; a fifth stage E5 wherein is divided the addition performed in the previous stage E4 by the number of bands which have not been multiplied by zero in the third stage E3, thus obtaining the distance referred to a single formant.

The method also comprises a stage E6 wherein are added the values obtained in the fifth stage E5, corresponding to all the formants considered which constitute the voice signal, thereby obtaining the distance or dissimilarity between the voice signal and the reference signal.

The above method may be represented by the following mathematical formula:

$$D = \frac{1}{F} \cdot \sum_{k=0}^{F} \frac{1}{S} \cdot \sum_{n=B1[k]}^{B2[k]} |C\text{-}v[n] \text{ - } Q + P[n]| . X[k][n]$$

where

$$S = \sum_{n=b1[k]}^{b2[k]} X[k][n]$$

v[n] is the energy value, in dB, of the voice signal frequency band n (equivalent to bc(n));

C is the maximum value, in dB, of the voice signal analyzed in the first interval frequency bands, equivalent to m1 and m2;

nlm is the number of frequency bands used;

b1[k] is the start of the frequency bands in the first interval (formant k);

b2[k] is the end of the frequency bands in the first interval (formant k);

bf[k][n], if equal to one, is a frequency band pertaining to the second interval (formant k);

G is the maximum value, in dB, of the voice signal analyzed in the frequency bands of the second interval of formant k (equivalent to m3 and m4);

p[n] is the energy value, in dB, of the frequency band in the reference signal of the phonetic unit to be compared (being equivalent to reference bp(n));

Q is the maximum value, in dB, of the reference signal in the frequency bands of the first interval in formant k;

X[k][n], if other than zero, means that the frequency band n energy value is used for calculating the distance or dissimilarity between the reference signal and the voice signal. Thus, the value of the present parameter varies depending on the following conditions:

X[k][n] = 1 if n is located in the first frequency interval and the value of the voice signal in frequency band n is above the maximum attenuated value of the voice signal in the first interval,

X[k][n] = 1 if n is such that bf[k][n] = 1 and the value of the voice signal in frequency band n is higher than the maximum attenuated value of the voice signal in the second interval,

X[k][n] = 0 for the remaining values in n;

F is the number of formants used;

rlm is the maximum attenuation, in dB, allowed in a frequency band if it is to be used in calculating the distance or dissimilarity between the voice signal and the reference signal.

An optimal embodiment is achieved when:

F = 2
rlm = 6
nlm = 19

F = 2 is used in view that the two first formants are considered to be sufficient for recognizing of a phoneme.

The value rlm = 6 is obtained experimentally.

It is furthermore evident that the frequency band between 100 Hz and 6000 Hz is optimal for recognition purposes. If the 19 critical standardized bands within this frequency margin are utilized, the formula's accuracy is maximal.

Said critical bands are as follows:

| Band | Lower limit (Hz) | Upper limit (Hz) |
|---|---|---|
| 1 | 100 | 200 |
| 2 | 200 | 300 |
| 3 | 300 | 400 |
| 4 | 400 | 510 |
| 5 | 510 | 630 |
| 6 | 630 | 770 |
| 7 | 770 | 920 |
| 8 | 920 | 1080 |
| 9 | 1080 | 1270 |
| 10 | 1270 | 1480 |
| 11 | 1480 | 1720 |
| 12 | 1720 | 2000 |
| 13 | 2000 | 2320 |
| 14 | 2320 | 2700 |
| 15 | 2700 | 3150 |
| 16 | 3150 | 3700 |
| 17 | 3700 | 4400 |
| 18 | 4400 | 5300 |
| 19 | 5300 | 6400 |

The above formula may be implemented via a computer program or combinational electronic circuit. Its implementation by a combinational circuit is described hereunder.

As can be seen in Figure 2, the device 1 for calculating the distance or dissimilarity between a voice signal and a reference signal, as used in a speech recognition system, comprises a plurality of block bands 2 which select the critical bands to be considered in said calculation; a maximum block 3 for calculating the maximum value m1; m2; m3; m4 of each of the frequency intervals considered, as well as calculating the maximum attenuated value mx1; mx2; mx3; mx4 thereof; an adder SUM1 which adds the number of critical bands considered for the first formant; an adder SUM2 which

6

adds the differences between the voice signal and the reference signal for the first formant; an adder SUM3 which adds the number of critical bands considered for the second formant; an adder SUM4 which adds the differences between the voice signal and the reference signal for the second formant; and inverse numbers table INV1 for the first formant; an inverse numbers table INV2 for the second formant; a multiplier MUL1 which performs the multiplication between the outlet of adder SUM2 of the differences between the voice signal and the reference signal, for the first formant, and the inverse number obtained at the outlet of table INV1 for the first formant (this operation being the equivalent of performing a division); a multiplier MUL2 which performs the multiplication between the outlet of adder SUM4 of the differences between the voice signal and the reference signal, for the second formant, and the inverse number obtained at the outlet of table INV2 for the second formant; and an adder SUM5 which adds the values obtained at the outlet of each of the multipliers MUL1 and MUL2.

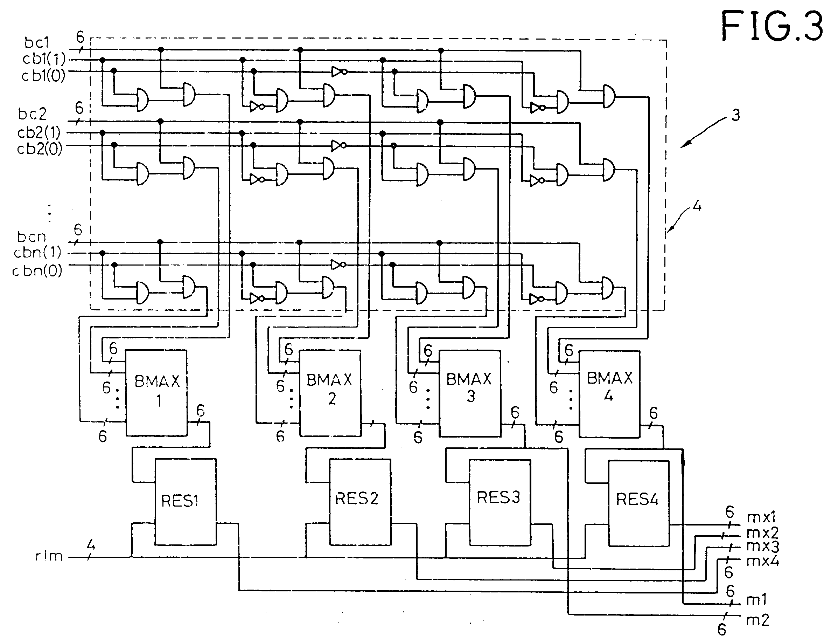

As can be seen in Figure 3, the maximum block 3 comprises a plurality of AND and NOT gates 4 which act as a filter, so that for each critical band and according to the value of coefficients $cb0(n)$ and $cb1(n)$, the position of said band is obtained (first interval of the first formant, second interval of the first formant, first interval of the second formant, or second interval of the second formant) in the spectrum of each voice sound, allowing the voice signal value $bc(n)$ in said critical band "n" to pass; a combinational electronic circuit BMAX1 which calculates the maximum value m4 (equivalent to G in the general formula, for the second formant) of the second interval of the second formant among the voice signal values in the critical bands comprised within the second interval of the second formant; a combinational electronic circuit BMAX2 which calculates the maximum value m3 (equivalent to G in the general formula, for the first formant) of the second interval of the first formant among the voice signal values in each of the critical bands comprised within the second interval of the first formant; a combinational electronic circuit BMAX3 which calculates the maximum value m2 (equivalent to C in the general formula, for the second formant) of the first interval of the second formant among the voice signal values in each of the critical bands comprised within the first interval of the second formant; a combinational electronic circuit BMAX4 which calculates the maximum value m1 (equivalent to C in the general formula, for the first formant) of the first interval of the first formant among the voice signal values in each of the critical bands comprised within the first interval of the first formant; a subtracter RES1 which makes the subtraction between the maximum value m4 of the voice signal obtained in the second interval of the second formant and the attenuation value rlm, thus obtaining the maximum attenuated value mx4 of the voice signal in the second interval of the second formant; a subtracter RES2 which makes the subtraction between the maximum value m3 of the voice signal obtained in the second interval of the first formant and the attenuation value rlm, thus obtaining the maximum attenuated value mx3 of the voice signal in the second interval of the first formant; a subtracter RES3 which makes the subtraction between the maximum value m2 of the voice signal obtained in the first interval of the second formant and the attenuation value rlm, thus obtaining the maximum attenuated value mx2 of the voice signal in the first interval of the second formant; and a subtracter RES4 which makes the subtraction between the maximum value m1 of the voice signal obtained in the first interval of the first formant and the attenuation value rlm, thus obtaining the maximum attenuated value mx1 of the voice signal in the first interval of the first formant.

Thus, at the outlet of maximum block 3 are obtained the maximum value m1 of the voice signal in the first interval of the first formant, the maximum value m2 of the voice signal in the first interval of the second formant, the maximum attenuated value mx1 of the voice signal in the first interval of the first formant, the maximum attenuated value mx2 of the voice signal in the first interval of the second formant, the maximum attenuated value mx3 of the voice signal in the second interval of the first formant, and the maximum attenuated value mx4 of the voice signal in the second interval of the second formant.

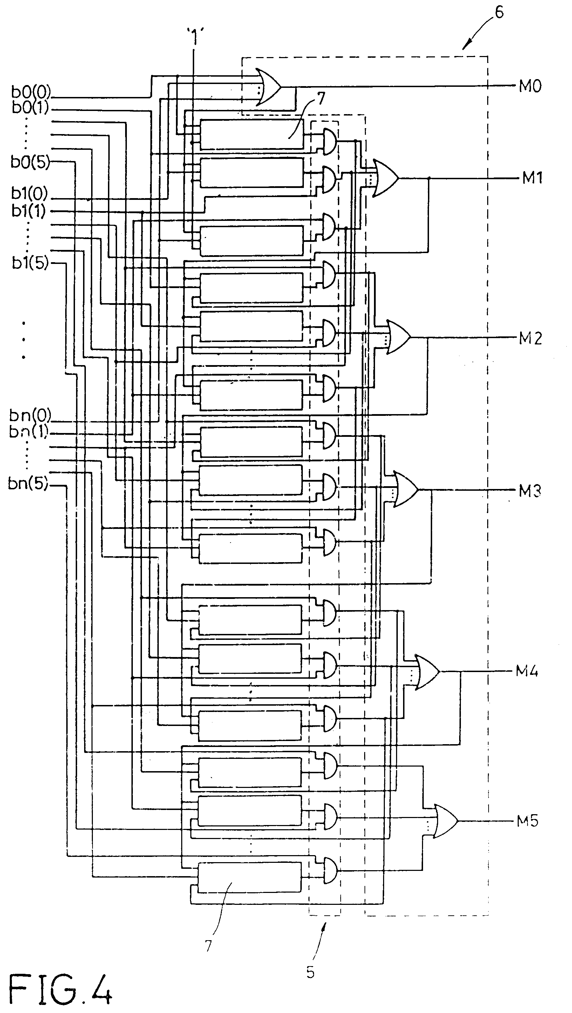

As can be seen in Figure 4, each block BMAX block, namely BMAX1; BMAX2; BMAX3; BMAX4 comprises a plurality of AND gates 5, a plurality of OR gates 6 and a plurality of blocks CMAX 7, the calculation being performed among the values located at the entry of block BMAX, bit by bit.

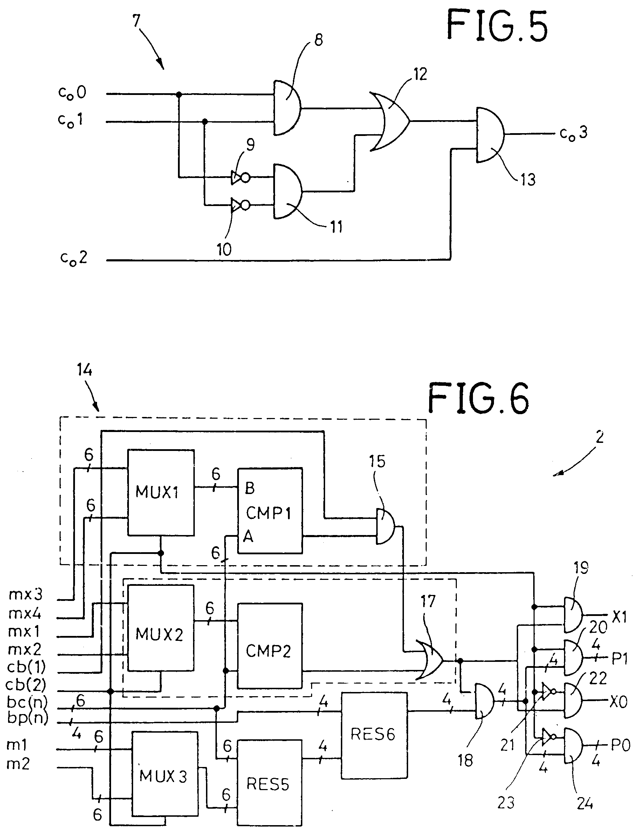

As can be seen in Figure 5, a block CMAX 7 comprises an AND gate 8 which performs the logical product between a coefficient $c_o0$ and a coefficient $c_o1$; a NOT gate 9 which performs the negation of coefficient $c_o0$; a NOT gate 10 which performs the negation of coefficient $c_o1$; an AND gate 11 which performs the logical product between the negated value of coefficient $cb0(n)$ and the negated value in coefficient $c_o1(n)$; an OR gate 12 which performs the logical adding between the value obtained at the outlet of AND gate 8 and the value obtained at the outlet of AND gate 11; and an AND gate 13 which performs the logical product between the value obtained at the outlet of OR gate 12 and a coefficient $c_02$, thereby obtaining in its outlet the value of a coefficient $c_03$ that is needed for calculating the maximum value in maximum block 3.

As can be seen in Figure 6, each band bock 2 comprises a first combinational electronic circuit 14 which in turn comprises a multiplexor MUX1 which makes a selection, according to the value of a coefficient $cb0(n)$, between a maximum attenuated value mx3 of the voice signal in the second interval of the first formant and a maximum attenuated value mx4 of the voice signal in the second interval of the second formant; a comparator CMP1 which performs a comparison between the value obtained at the outlet of multiplexor MUX1 and the value of the voice signal $bc(n)$ in the critical band "n" considered to belong to the second interval of the first formant or to the second interval of the second formant, according to the above mentioned value of coefficient $cb0(n)$; an AND gate 15 which performs the logical product between the value at the outlet "A≤B" (0 or 1) of comparator CMP1 and the value of the second coefficient cb1(n), which allows the value obtained in outlet "A≤B" of comparator CMP1 to pass in the event that the critical band is located within the second interval of the first formant or within the second interval of the second formant.

Thus, said combinational electronic circuit 14 performs the part of the general formula:

$$X[k][n] = 1, \text{ if } n \text{ is such that } bf[k][n] = 1, \text{ i.e. the critical band treated belongs to the second interval; and}$$

$$v[n] \geq G\text{-rlm}.$$

Furthermore, each band block also comprises a second combinational electronic circuit 16 which in turn comprises a multiplexor MUX2 which selects, according to the value of a coefficient cb0(n), the maximum attenuated value mx1 of the voice signal in the first interval of the first formant and the maximum attenuated value mx2 of the voice signal in the first interval of the second formant; and a comparator CMP2 which performs the comparison between the value obtained at the outlet of multiplexor MUX2 and the value of the reference signal bp(n) in the critical band "n" considered to be comprised in the first interval of the first formant or in the first interval of the second formant.

Said combinational electronic circuit performs the part of the general formula:

$$X[k][n] = 1, \text{ if } n \text{ is such that it belongs to the first interval; and}$$

$$v[n] \geq (C\text{-rlm}).$$

Circuit 16 also comprises an OR gate 17 which performs the logic addition between the outlet "A≤B" (0 or 1) of comparator CMP2 and the outlet (0 or 1) of AND gate 15, in a way that, since the second interval in each formant is comprised in the first interval of the corresponding formant, in the event that the critical band is located in the second interval of a formant, the outlet value of the first electronic circuit 14 and the outlet value of the second electronic circuit 16 are borne in mind, whereas if the critical band is located in the first interval, only the outlet value of the second electronic circuit 16 is borne in mind due to the presence of the AND gate 15 in the first combinational electronic circuit 14, which acts as a filter.

Thus, said OR gate 17 checks that one of the two evaluated conditions is met by circuit 14 and circuit 16. If both or one of the two conditions are complied with, a 1 appears at the outlet of OR gate 17. In the event that neither of the conditions is complied with, the result is:

$$X[k][n] = 0.$$

Each band block 2 also comprises a multiplexor MUX3 which makes a selection, according to the value of coefficient cb0(n), between a maximum value m1 of the voice signal in the first interval of the first formant and a maximum value m2 of the voice signal in the first interval of the second formant; a subtracter RES5 which performs the subtraction, in absolute value, between the value obtained at the outlet of multiplexor MUX3 and the value of the voice signal bc(n) in critical band "n"; a subtracter RES6 which performs the subtraction, in absolute value, between the value obtained at the outlet of subtracter RES5 and the value of the reference signal bp(n) in the critical band "n" being considered.

Thus, by the use of these elements, the calculation is carried out for the part of the general formula:

$$|C\text{-}v[n]\text{-}Q\text{+}p[n]|$$

Each band also comprises an AND gate 18 which performs the logical product between the value obtained (0 or 1) at the outlet of subtracter RES6 and the value obtained at the outlet of the above mentioned OR gate 17.

Using said gate, the following calculation of the general formula is performed:

$$|C\text{-}v[n]\text{-}Q\text{+}p[n]|.X[k][n]$$

It also comprises an AND gate 19 which performs the logical product between the outlet value obtained in OR gate 17 and the value of coefficient cb0(n), in order to obtain a 1 at the outlet x1 in the event that the critical band is borne in mind in the calculation of the difference between the voice signal and the reference signal for the second formant; an AND gate 20 which performs the logical product between the value obtained at the outlet of AND gate 18 and the value of coefficient cb0(n), in order to obtain, at outlet p1, the value of the difference between the voice signal and the reference signal, in the event that the treated band is borne in mind for performing said calculation; a NOT gate 21 which performs the negation of coefficient cb0(n); an AND gate 22 which performs the logical product between the value obtained at the outlet of NOT gate 21 and the value obtained at the outlet of OR gate 17, with the intention of obtaining a 1 at the outlet x0 in the event that the critical band is considered for calculating the difference between the voice signal and the reference signal, for the first formant; a NOT gate 23 which performs the negation of coefficient cb0(n); and an AND gate 24 which performs the logical product between the outlet value obtained in NOT gate 23 and the value obtained at the outlet of AND gate 18, with the intention of obtaining, at its outlet p0, the value of the difference between the voice signal and the reference signal for the first formant.

The operation of device 1 which performs the method for calculating the distance between the voice signal and the reference signal, as used in speech recognition, is as follows.

At the inlets of maximum block 3 are located the voice signal values bc(n) in each of the "n" critical bands considered, the coefficient cb0(n) and the coefficient cb1(n). In this way, by means of the plurality of AND and NOT gates 4, a selection is conducted of said values according to the zone in which the respective critical bands are located. Each BMAX block BMAX1; BMAX2; BMAX3; BMAX4 implements the following equations:

$$b_0{}^{max} = b_0{}^0 + b_0{}^1 + b_0{}^2 + ... + b_0{}^n$$

$$b_1{}^{max} = c_0{}^0 b_1{}^0 + c_0{}1 b_1{}^1 + c_0{}^2 b_1{}^2 + ... + c_0{}^n b_1{}^n$$

$$b_2{}^{max} = c_1 b_2{}^0 + c_1{}^1 b_2{}^1 + c_1{}^2 b_2{}^2 + ... + c_1{}^n b_2{}^n$$

$$b_3{}^{max} = c_2{}^0 b_3{}^0 + c_2{}^1 b_3{}^1 + c_2{}^2 b_3{}^2 + ... + c_2{}^n b_3{}^n$$

$$b_4{}^{max} = c_3{}^0 b_4{}^0 + c_3{}^1 b_4{}^1 + c_3{}^2 b_4{}^2 + ... + c_3{}^n b_4{}^n$$

$$b_5{}^{max} = c_4{}^0 b_5{}^0 + c_4{}^1 b_5{}^1 + c_4{}^2 b_5{}^2 + ... + c_4{}^n b_5{}^n$$

Block BMAX4 thus calculates the maximum value m1 of the voice signal between the values of the critical bands comprised in the first interval of the first formant; block BMAX2 calculates the maximum value m3 of the voice signal between the values of the critical bands comprised in the second interval of the first formant; block BMAX3 calculates the maximum value m2 of the voice signal between the values of the critical bands comprised in the first interval of the second formant; and block BMAX1 calculates the maximum value m4 of the voice signal between the values of the critical bands comprised in the second interval of the second formant.

Once said maximum values m1, m2, m3, m4 are calculated, a calculation is performed of the maximum attenuated values mx1, mx2, mx3, mx4, so that subtracter RES4 calculates the maximum attenuated value mx1 of the voice signal within the first interval of the first formant; subtracter RES2 calculates the maximum attenuated value mx3 of the voice signal within the second interval of the first formant; subtracter RES3 calculates the maximum attenuated value mx2 of the voice signal within the first interval of the second formant; and subtracter RES1 calculates the maximum attenuated value mx4 of the voice signal within the second interval of the second formant.

Each block CMAX 7 comprised in a BMAX block BMAX1; BMAX2; BMAX3; BMAX4 implements the following equations:

$$c_0{}^n = b_0{}^{max} b_0{}^n + b_0{}^{max} b_0{}^n$$

$$c_1{}^n = c_0{}^n (b_1{}^{max} b_1{}^n + b_1{}^{max} b_1{}^n)$$

$$c_2{}^n = c_1{}^n (b_2{}^{max} b_2{}^n + b_2{}^{max} b_2{}^n)$$

$$c_3{}^n = c_2{}^n (b_3{}^{max} b_3{}^n + b_3{}^{max} b_3{}^n)$$

$$c_4{}^n = c_3{}^n (b_4{}^{max} b_4{}^n + b_4{}^{max} b_4{}^n)$$

At the outlet of maximum block 3, the four above-mentioned maximum attenuated values mx1, mx2, mx3, mx4 are thus obtained, in addition to the maximum value m1 of the voice signal within the first interval of the first formant and the maximum value m2 of the voice signal within the first interval of the second formant.

All the values obtained at the outlet of maximum block 3 pass on to the inlet of each of the band blocks 2. Furthermore, each band block 2 has a cb0(n) inlet coefficient (where n is the number of the band being considered) and a cb1(n) coefficient for said band, the value of the bc(n) voice signal in the critical band "n" to be treated and the value of the bp(n) reference signal in the same critical band "n".

Therefore, each band block 2 establishes whether the critical band "n" being treated is taken in consideration for calculating the difference between the voice signal and the reference signal. If not considered at the outlet of the AND 19, AND 20, AND 22 and AND 24 gates, the value obtained is zero.

If the critical band is considered for said calculation, depending on the formant being treated, a 1 appears in AND 19 (second formant)/AND 22 (first formant) gates, whereas in AND 20 (second formant)/AND 24 (first formant) gates appears the difference between the value of the voice signal and the value of the reference signal, in said critical band "n".

The adder SUM1 adds all the values obtained at the outlet of AND gate 19 in each of the band blocks 2, thus performing the calculation of the number of critical bands used in calculating the difference between the voice signal and the reference signal for the second formant.

The adder SUM2 adds all the values obtained at the outlet of AND gate 20 in each of the band blocks 2, thus performing the total addition of the differences between the voice signal and the reference signal for the second formant.

The adder SUM3 adds all the values obtained at the outlet of AND gate 22 in each of the band blocks 2, thus performing the calculation of the number of critical bands used in calculating the difference between the voice signal and the reference signal for the first formant.

The adder SUM4 adds all the values obtained at the outlet of AND gate 24 in each of the band blocks 2, thus performing the total addition of the differences between the voice signal and the reference signal for the first formant.

The adders SUM1 and SUM3 thus implement the following part of the formula:

$$S = \sum_{n=b1[k]}^{b2[k]} X[k][n]$$

whereas the adders SUM2 and SUM4 implement the following part of the formula:

$$\sum_{n=b1[k]}^{b2[k]} |C\text{-}v[n] - Q\text{+}p[n]|.X[k][n]$$

The inverse numbers table INV1 obtains, at its outlet, the equivalent to the inverse of the value obtained at the outlet of adder SUM1, for the purpose of converting the formula's division into a multiplication by the inverse of what would be the divider value.

The inverse numbers table INV2 obtains, at its outlet, the equivalent to the inverse of the value obtained at the outlet of adder SUM3.

The above tables provide the value of $1/S$ in the general formula.

The value obtained at the outlet of table INV1 and the value obtained at the outlet of adder SUM2 are multiplied by multiplier MUL1, whereas the value obtained at the outlet of table INV2 and the value obtained at the outlet of adder SUM4 are multiplied by multiplier MUL2.

The results of multiplying by multiplier MUL1 and the result of multiplying by multiplier MUL2 are added by means of adder SUM5 to obtain, at its outlet, the total value of the difference or dissimilarity D between the voice signal and the reference signal.

The smaller this value, the shorter the distance between the voice signal and the reference signal to which it is being compared.

Although reference has been made to specific embodiments of the invention, it will be evident to the expert on the subject that the method and device described herein are liable to numerous variations and modifications, and that all the details mentioned may be replaced by other technically equivalent details without departing from the protective scope defined in the appended clams.

It is obvious that the general formula of the method may be implemented in multiple ways.

## Claims

1. Method for calculating the distance or dissimilarity between a voice signal and a reference signal to be used in a speech recognition system, _characterized_ in that, in the reference signal, a plurality of first intervals corresponding to each formant or resonance frequency are predefined, said method comprising for each formant the stages of:

    a) determining the maximum value (m1; m2) of the voice signal from among the energy values that said signal presents in a plurality of predetermined frequency bands into which the first frequency interval is divided;
    b) calculating, for each frequency band, a parameter indicative of the dissimilarity between the voice signal, as standardized in respect to the maximum value (m1; m2) obtained in stage a), and the reference signal.

2. Method according to Claim 1, characterized in that each first interval comprises a second interval which defines the frequencies wherein the voice signal formant must be located so that said voice signal corresponds to the formant of a speech phonetic unit to be recognized, and in that

stage a) further comprises to determine the maximum energy value (m3; m4) of said voice signal from among the energy values that said voice signal presents in each of a plurality of predetermined bands into which the second frequency interval is divided; subtracting, from the maximum values (m1, m2, m3, m4) corresponding to the first and second intervals, an attenuation value (rlm);

stage b) comprises to calculate, for each frequency band, the difference in absolute value between the energy value of the voice signal, standardized in respect to the maximum value (m1; m2) of the first interval obtained in stage a), and the reference signal value;

the method further comprising the stages of:

c) multiplying the values obtained in stage b) by zero when, in a frequency band, the energy value of the voice signal (bc(n)) is lower than the maximum attenuated value (mx1; mx2) of the voice signal, if the band n is located in the first interval, and when the energy value of the voice signal is lower than the maximum attenuated value (mx1, mx2; mx3, mx4) of the voice signal in the first and second intervals, if the band is located in the second interval,

d) adding the differences remaining from stage c);

e) dividing the addition performed in the previous stage by the number of bands not multiplied by zero in stage c), thus obtaining the distance referred to a single formant, and

the method further comprising a stage wherein are added the values of all the formants considered obtained in stage e), which constitute the voice signal, thus obtaining the distance or dissimilarity between the voice signal and the reference signal.

3. Method according to Claim 2, characterized in that the attenuation value (rlm) in stage a) is comprised between 3 and 48 dB.

4. Method according to Claim 2, characterized in that, depending on the formant of the phonetic unit to be recognized, the second interval comprises a plurality of subintervals, so that the maximum value of said second interval (mx3; mx4) is determined from among the maximum values of each of said subintervals.

5. Device for implementing the method described in Claim 2, characterized in that it comprises a first combinational electronic circuit (3) which performs, for all the formants, the operations corresponding to stage a); a plurality of second combinational electronic circuits (2), each of which performs the operations corresponding to stages b) and c), the number of circuits (2) depending of the number of predetermined frequency bands; a plurality of first adder electronic circuits (SUM2, SUM4), each of which performs the addition corresponding to stage d); a plurality of second adder electronic circuits (SUM1, SUM3), which add the number of bands remaining from stage c), as indicated in stage e); a plurality of electronic circuits (INV1, INV2) for determining the inverse number corresponding to the addition obtained in the second adder electronic circuits (SUM1, SUM3); a plurality of multiplier electronic circuits (MUL1, MUL2), which multiply the inverse numbers obtained by the additions obtained in the first adder electronic circuits (SUM2, SUM4), whereby is performed, for all the formants, the division corresponding to stage c); and a third adder electronic circuit (SUM5), which adds the values obtained in stage e) corresponding to all the formants considered, which constitute the voice signal, thus obtaining the distance or dissimilarity (D) between the voice signal and the reference signal.

6. Device according to Claim 5, characterized in that the first combinational electronic circuit (3) comprises a plurality of AND and NOT logic gates (4) which select the values of the voice signal (bc(n)) in each of the predetermined frequency bands, depending on whether they are located in the first interval or in the second interval of frequencies, of each formant, of the reference signal; a plurality of third combinational electronic circuits (BMAX1, BMAX2, BMAX3, BMAX4) which determine the maximum value from among the selected values by the AND and NOT logic gates (4); and a plurality of subtracter electronic circuits (RES1, RES2, RES3, RES4) in absolute value which subtract the attenuation value (rlm) from the maximum values (m1, m2, m3, m4) obtained by the third combinational electronic circuits.

7. Device according to Claim 6, characterized in that the third combinational electronic circuits (BMAX1, BMAX2, BMAX3, BMAX4) comprise a plurality of AND (5) and OR (6) logic gates and a plurality of fourth combinational electronic circuits (7) which select the appropriate bits of the voice signal values (bc(n)) in each of the predetermined frequency bands, for determining the maximum value (m1; m2; m3; m4).

8. Device according to Claim 7, characterized in that the fourth combinational circuits (7) comprise a plurality of AND (8, 11, 13), NOT (9, 10) and OR (12) logic gates for determining the values of the coefficients $c_m^n$ according to the equations:

$$c_0^{\ n} = b_0^{\ max}b_0^{\ n} + b_0^{\ max}b_0^{\ n}$$

$$c_1^{\ n} = c_0^{\ n}(b_1^{\ max}b_1^{\ n} + b_1^{\ max}b_1^{\ n})$$

$$c_2^{\ n} = c_1^{\ n}(b_2^{\ max}b_2^{\ n} + b_2^{\ max}b_2^{\ n})$$

$$c_3^{\ n} = c_2^{\ n}(b_3^{\ max}b_3^{\ n} + b_3^{\ max}b_3^{\ n})$$

$$c_4^{\ n} = c_3^{\ n}(b_4^{\ max}b_4^{\ n} + b_4^{\ max}b_4^{\ n})$$

9. Device according to Claim 5, characterized in that the second combinational electronic circuit (2) comprises a first AND logic gate (15) for determining whether or not the frequency band considered is within the second frequency interval; a plurality of first multiplexor electronic circuits (MUX1, MUX2) and a plurality of comparator electronic circuits (CMP1, CMP2) for eliminating the frequency bands with a voice signal value lower than the maximum value (m1; m2) of the attenuated voice signal, said maximum value (m1; m2) being the corresponding to the first or the second interval, depending on which of these intervals is located the frequency band considered, said multiplexor circuits (MUX1, MUX2) being connected to the corresponding comparator circuits (CMP1, CMP2), the comparator circuit (CMP1) corresponding to the second interval being connected to the first AND gate (15); an OR gate (17) which detects whether the band considered is useful for calculating the distance upon receiving a "1" from one of the comparator electronic circuits (CMP1, CMP2) directly when the frequency band is comprised within the first interval and, via a first AND gate (15), when the frequency band is comprised within the second interval; a second multiplexor electronic circuit (MUX3) and a first (RES5) and second (RES6) subtracter electronic circuits in absolute value for calculating the differences between the voice signal and reference signal values for each of the predetermined frequency bands, said second multiplexor circuit (MUX3) being connected to the first subtracter circuit (RE5) in absolute value and the second subtracter circuit (RES6) in absolute value being connected to the first subtracter circuit (RE5) in absolute value; a second AND logic gate (18), connected to the second subtracter circuit (RE6) in absolute value, which, if the OR gate (17) presents a "1" at its outlet, allows the difference value to pass; a plurality of third AND gates (20, 24), as many as formants are being considered, connected to the second AND gate (18), presenting, at its outlet, the value of the difference in said AND gate (20, 24) associated to the formant being treated, if the OR gate (17) presents a "1" at its outlet; a plurality of fourth AND gates (19, 22), as many as formants are being considered, connected to the OR gate (17), one of which, corresponding to the formant being treated, presents a "1" at its outlet, if the OR gate also presents a "1" at its outlet; and a plurality of NOT gates (21, 23) for differentiating the AND gates (19, 20; 22, 24) corresponding to each of the formants being considered.

FIG.1

FIG.2

FIG.3

FIG.4

# FIG.5

# FIG.6

## INTERNATIONAL SEARCH REPORT

International application No.
PCT/ES 96/00088

### A. CLASSIFICATION OF SUBJECT MATTER

IPC6 : G10L 9/02

According to International Patent Classification (IPC) or to both national classification and IPC

### B. FIELDS SEARCHED

Minimum documentation searched (classification system followed by classification symbols)

IPC6 : G10L

Documentation searched other than minimum documentation to the extent that such documents are included in the fields searched

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | US 3428748 A (FLANAGAN) 18.02.69 <br> Column 1, line 54-column 2, line 26; column 4, line 24- line 55 | 1 |
| A | CA 1246745 A (HUNT) 13.12.88 <br> Page 5, line 24- page 6, line 34 | 1 |
| A | US 3919481 A (KALFAIAN)11.11.75 <br> Column 1, line 31- line 55 | 1 |
| A | GB 1020527 A (IBM) 16.02.66 <br> Column 1, line 15-column 2, line 77 | 2 |

☐ Further documents are listed in the continuation of Box C.   ☒ See patent family annex.

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 5 July 1996 (05.07.96) | 11 July 1996 (11.07.96) |

| Name and mailing address of the ISA/ <br> S.P.T.O. | Authorized officer |
|---|---|
| Facsimile No. | Telephone No. |

Form PCT/ISA/210 (second sheet) (July 1992)

17